# EUROPEAN PATENT APPLICATION

(11) **EP 0 727 295 A2**
(43) Date of publication of application: **21.08.1996**
(21) Application number: 96300363.7
(22) Date of filing: 18.01.1996
(51) Int. Cl.: B29C 43/02, B29C 43/58, B30B 15/22

(54) **Method and apparatus for plastic compression molding in a mechanical stamping press**

(30) Priority: 09.02.1995 US 385776
(71) Applicant: EWI, INC., Southfield, Michigan 48075 (US)
(72) Inventor: Gadson, Philip C., Granger, Indiana 46530 (US); Shurkey, Robert P., Metamora, Michigan 48455 (US)
(74) Representative: Bannerman, David Gardner

(57) **Abstract**

A method and apparatus for plastic compression molding in a mechanical stamping press. Prior art mechanical stamping presses are incompatible with plastic compression molding due to the fact that the ram/upper die plate descends with relatively constant velocity until it contacts a fixed lower die plate. In such a scenario, there is no way to control the rate of closure between the two die halves which is an essential control parameter for compression molding of plastic parts. The present invention overcomes this inherent problem in the prior art devices by mounting the lower die half on a controllable descending die cushion. The controllable descending die cushion allows the lower die half to move in the same vertical direction as the ram of the mechanical press. When the ram is descending toward the lower die, the controllable descending die cushion moves the lower die downward at the same velocity that the ram is moving. The lower die is then gradually decelerated until the ram overtakes it and begins to apply pressure between the die halves. The process is controlled so that the upper and lower die halves are united at a controlled rate and then decelerated until they rest on the bed of the press at the completion of the cycle. The full weight of the ram is thereby incrementally applied to the die. By this method, the application of the press tonnage to the die may be very closely controlled, such that the rate of closure between the die halves may be set at any desired value. Because the present invention allows complete control of the rate of die closure, it allows the mechanical stamping press to be utilized in the compression molding of plastic.

## Description

The present invention relates generally to mechanical stamping presses and more particularly to a method and apparatus for plastic compression molding in mechanical stamping presses.

Plastic compression molding (e.g., with fiber reinforced plastics (FRP)) has traditionally been done in large, high tonnage hydraulic presses. Hydraulic presses incorporate a hydraulic piston which moves an upper die half against a lower die half. Metered flow of hydraulic fluid into the hydraulic piston is used to very accurately control the squeezing pressures applied to the plastic material in the heated die. After a predetermined amount of time, the upper die half is returned to its starting position, thereby separating the die halves, and the molded part is removed from the die. Depending upon the configuration of the plastic part being molded, the rate of closure between the die halves, as well as the total close time, can be very critical. The high degree of controllability of the hydraulic piston makes it well suited for such applications.

Mechanical stamping presses, on the other hand, are typically used where large forces are required without precision control, such as stamping parts from sheet metal. The mechanical stamping press utilizes a flywheel that is kept spinning at a constant speed. Energy stored in the flywheel is then imparted to a very heavy ram which forces the two die halves together with great force. In contrast to the squeezing produced by the hydraulic press, the mechanical stamping press creates a violent collision between the upper and lower die halves. Because the flywheel is always spinning, there is no way to slow down the rate of descent of the ram.

Mechanical stamping presses are much less expensive than hydraulic presses and have a faster cycle time. It would therefore be desirable to mold plastic parts in a mechanical stamping press. However, the inability to control the rate of die closure in the mechanical stamping press prevents its use in such applications. There is therefore a need for a way to utilize a mechanical stamping press in the manufacture of compression molded plastic parts. The present invention is directed toward meeting those needs.

The present invention relates to a method and apparatus for plastic compression molding in a mechanical stamping press. Prior art mechanical stamping presses are incompatible with plastic compression molding due to the fact that the ram/upper die plate descends with relatively constant velocity until it contacts a fixed lower die plate. In such a scenario, there is no way to control the rate of closure between the two die halves which is an essential control parameter for compression molding of plastic parts. The present invention overcomes this inherent problem in the prior art devices by mounting the lower die half on a controllable descending die cushion. The controllable descending die cushion allows the lower die half to move in the same vertical direction as the ram of the mechanical press. When the ram is descending toward the lower die, the controllable descending die cushion moves the lower die downward at the same velocity that the ram is moving. The lower die is then gradually decelerated until the ram overtakes it and begins to apply pressure between the die halves. The process is controlled so that the upper and lower die halves are united at a controlled rate and then decelerated until they rest on the bed of the press at the completion of the cycle. The full weight of the ram is thereby incrementally applied to the die. By this method, the application of the press tonnage to the die may be very closely controlled, such that the rate of closure between the die halves may be set at any desired value. Because the present invention allows complete control of the rate of die closure, it allows the mechanical stamping press to be utilized in the compression molding of plastic.

In one form of the invention, an apparatus for compression molding deformable materials is disclosed, comprising a ram having a weight and operable to reciprocate in a vertical direction; an upper die half coupled to the ram; a lower die half operable to mate with the upper die half when the ram descends a sufficient distance; and a controllable descending die cushion supporting the lower die half; wherein the controllable descending die cushion is operable to cause the lower die half to descend at a cushion velocity profile which is less than a ram velocity profile so that a rate of closure of the upper die half with the lower die half is controllable, such that the ram weight is incrementally applied to the mated die halves.

In another form of the invention a controllable descending die cushion adapted for use with a mechanical stamping press which includes a ram having a weight, the ram operable to reciprocate in a vertical direction and an upper die half coupled to the ram is disclosed, the controllable descending die cushion comprising: a lower die half operable to mate with the upper die half; a platen supporting the lower die half; at least one hydraulic cylinder for control of a motion of the at least one hydraulic cylinder; wherein the processing means is operable to cause the lower die half to descend at a cushion velocity profile which is less than a ram velocity profile so that a rate of closure of the upper die half with the lower die half is controllable, the ram weight is incrementally applied to the mated die halves.

In another form of the invention a method for compression molding deformable materials is disclosed, comprising the steps of: (a) placing the deformable material in a lower die half; (b) causing a ram having an upper die half affixed thereto and having a ram weight to descend toward the lower die half at a first velocity following a first velocity profile over time; and (c) causing the lower die half to descend at a second velocity, the second velocity following a second velocity profile over time, wherein the first and second velocity profiles cause the upper die half to overtake the lower die half at a controllable closure rate, thereby incrementally applying the ram weight to the mated die halves.

In another form of the invention a mechanical stamping press is disclosed, comprising: A ram having a weight and operable to reciprocate in a vertical direction; an upper die half coupled to the ram; a lower die half operable to mate with the upper die half when the ram descends a sufficient distance; and a controllable descending die cushion suporting the lower die half; wherein the controllable descending die cushion is operable to cause the lower die half to descend at a cushion velocity profile which is less than a ram velocity profile so that a rate of closure of the upper die half with the lower die half is controllable, such that a collision is produced between the upper and lower die halves which has a first collision magnitude that is less than a second collision magnitude created when the lower die half does not move.

FIG. 1 is a schematic perspective view of a mechanical stamping press of the present invention.

FIG. 2 is a side schematic cross-sectional view of the controllable die cushion of the mechanical stamping press of the present invention.

FIGS. 3-6 are schematic diagrams of the mechanical stamping press and associated control system of the present invention.

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Prior art mechanical stamping presses are incompatible with plastic compression molding due to the fact that the ram/upper die plate descends with relatively constant velocity until it contacts a fixed lower die plate. In such a scenario, there is no way to control the rate of closure between the two die halves which is an essential control parameter for compression molding of plastic parts. The present invention overcomes this inherent problem in the prior art devices by mounting the lower die half on a controllable descending die cushion. The controllable descending die cushion allows the lower die half to move in the same vertical direction as the ram of the mechanical press. When the ram is descending toward the lower die, the controllable descending die cushion moves the lower die downward at the same velocity that the ram is moving. The lower die is then gradually decelerated until the ram overtakes it and begins to apply pressure between the die halves. The process is controlled so that the upper and lower die halves are united at a controlled rate and then decelerated until they rest on the bed of the press at the completion of the cycle. The full weight of the ram is thereby incrementally applied to the die. By this method, the application of the press tonnage to the die may be very closely controlled, such that the rate of closure between the die halves may be set at any desired value. Because the present invention allows complete control of the rate of die closure, it allows the mechanical stamping press to be utilized in the compression molding of plastic.

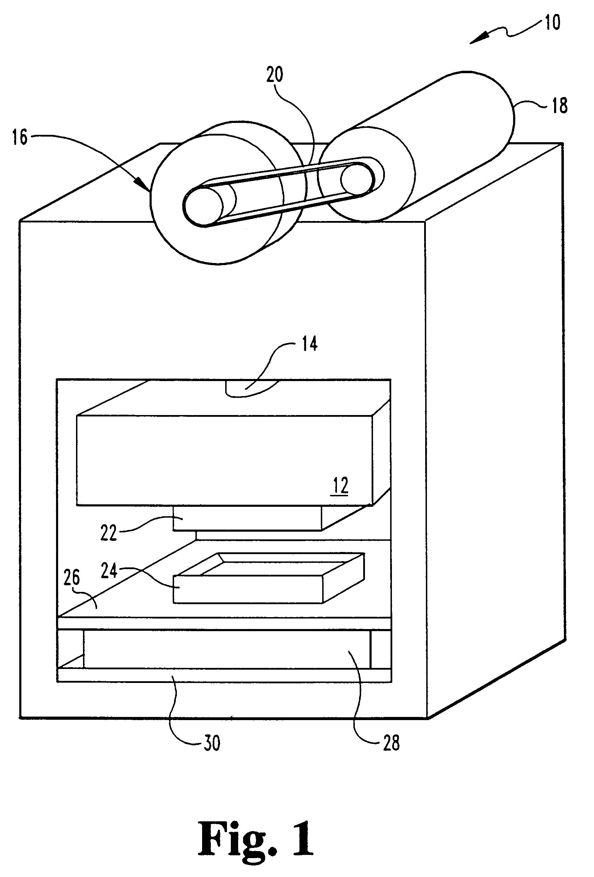

Referring now to FIG. 1, there is illustrated a mechanical stamping press of the present invention, illustrated generally at 10. The mechanical press 10 may be, for example, a 250 ton straight side press manufactured by Verson. The mechanical press 10 includes a ram 12 of very great weight such as 250 tons, for example. The ram 12 is coupled to a shaft 14 for vertical reciprocal motion. Vertical motion is imparted to ram 12 by coupling the shaft 14 to a flywheel 16. The flywheel 16 is kept in continuous motion by a motor 18 coupled thereto by a belt 20. When it is desired to impart vertical motion to the ram 12, a clutch between the flywheel 16 and the vertical shaft 14 is engaged, thereby imparting the energy stored in flywheel 16 to the ram 12. An upper die half 22 is coupled to the bottom surface of the ram 12. A lower die half 24 rests on a platen 26. The upper die 22 and lower die 24 are positioned so that they mate with one another when the ram 12 is lowered a sufficient distance. Recesses are formed within the upper die 22 and lower die 24 in order to impart a desired shape to the plastic material being molded, as is known in the art. In order to impart motion to the lower die 24, the platen 26 rests on a controllable descending die cushion 28. The controllable descending die cushion 28 allows the platen 26 (and hence the lower die 24) to be moved vertically at a controlled rate. The controllable descending die cushion 28 rests on the bed 30 of the mechanical press 10.

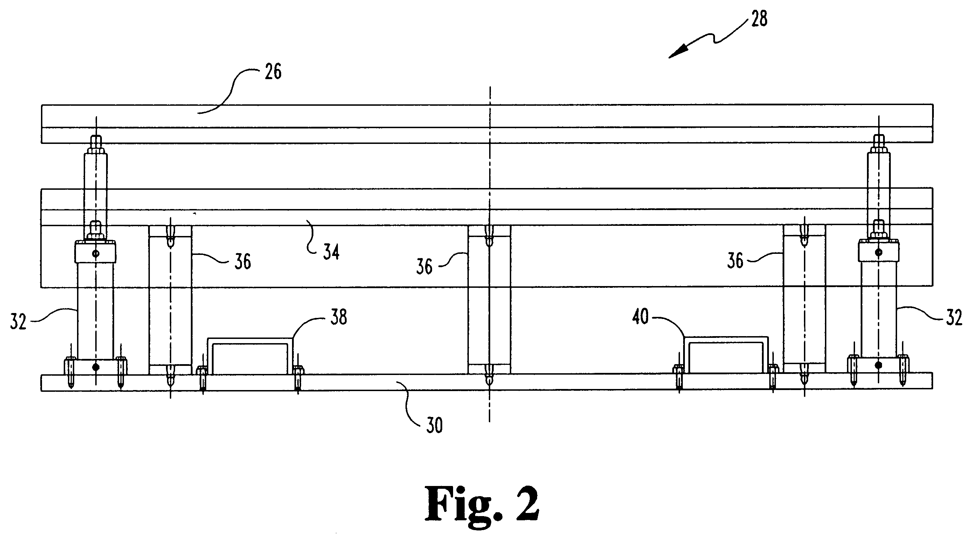

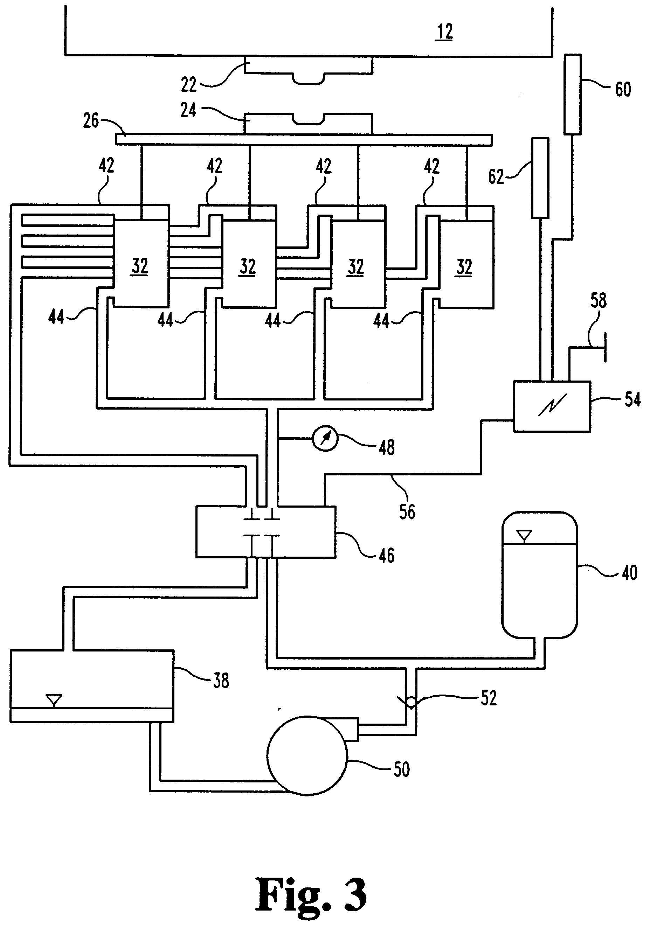

Referring now to FIG. 2, the controllable descending die cushion 28 is shown in schematic cross-section. The platen 26 is supported by a plurality of hydraulic cylinders 32. In a preferred embodiment, four such hydraulic cylinders 32 are used to support the platen 26. The hydraulic cylinders 32 are under the control of a control system (not shown, see FIGS. 3-6) which can be used to raise or lower the platen 26 by extension or retraction of the hydraulic cylinders 32. The downward travel of the platen 26 is limited by a plurality of beams 34 which rest on a plurality of cylinders 36. The beams 34 and cylinders 36 are preferably formed from cold rolled steel. The cylinders 36 are coupled to the bed 30, while the beams 34 are coupled to the tops of the cylinders 36. The beams preferably have a cross-sectional dimension of 2"x 6". The cylinders 36 provide support for the platen 26 when it is under the pressure of the ram 12. The beams 34 are placed between the cylinders 36 in order to keep them from bending under the great pressure exerted by the ram 12.

A hydraulic fluid reservoir 38 and a hydraulic fluid accumulator 40 are each coupled to the bed 30. As is described in greater detail hereinbelow, the control system utilizes the cylinders 32 to impart a downward velocity on the platen 26 (and hence the lower die 24) as the ram 12/upper die 22 move downward. The downward velocity of the platen 26 is gradually decreased so that the ram 12/upper die 22 gradually catch up with the lower die 24 and gradually exert a pressure upon it. The flywheel 16 is disengaged from the ram 12 and the retraction of the hydraulic cylinders 32 is slowed so that the vertical speed of the ram 12/platen 26 is just reduced to zero when the ram 12/platen 26 come to rest on the cross beams 34. All of this activity is under the control of a control system coupled to the mechanical press 10 and the descending die cushion 28.

Referring now to FIG. 3, the controllable descending die cushion 28 and mechanical press 10 are shown in schematic form in their quiescent state. Each of the hydraulic cylinders 32 includes two hydraulic fluid ports 42, 44 which are in fluid communication with a directional proportional flow control valve 46. The flow control valve 46 is used to move the hydraulic cylinders up or down at any desired speed, and is preferably a model KHDG5V-7-2C200N-X, manufactured by Vickers, Inc., of Carol Stream, Illinois. A pressure meter 48 is coupled to the hydraulic fluid ports 44 in order to give a visual pressure indication of the hydraulic fluid. The flow control valve 46 drains hydraulic fluid into a reservoir 38 and receives pressurized hydraulic fluid from an accumulator 40. A pump 50 is provided to automatically pressurize the accumulator 40 using fluid from the reservoir 38. A one-way check valve 52 is provided to keep the contents of accumulator 40 under pressure. The flow control valve 46 is under the control of a microcontroller 54 by means of signal line 56. The microcontroller 54 is preferably a model 5-10 programmable controller manufactured by Allen-Bradley, of Milwaukee, Wisconsin. It will be appreciated by those skilled in the art that the microcontroller 54 may be comprised of any device, analog or digital, which is capable of producing the control signals necessary to cause the mechanical press 10 and descending die cushion 28 to operate in the manner described herein. The mechanical press 10 is also under the control of the microcontroller 54 via signal line 58. The signal line 58 is used to control the engagement and disengagement of the flywheel 16 clutch. Microcontroller 54 receives information regarding the position of the ram 12 from linear transducer 60 and information regarding the position of platen 26 from linear transducer 62. Linear transducers 60 and 62 are preferably manufactured by Balluff of Florence, Kentucky. By differentiating the signals from linear transducers 60 and 62, the microcontroller 54 can calculate the velocity of the ram 12 and platen 26, respectively.

When the system is in the quiescent state illustrated in FIG. 3, the die 24 is heated to the appropriate temperature required for the compression molding of the particular plastic being used, and raw plastic material is inserted into the lower die 24. It will be appreciated by those skilled in the art that the present invention may be used to mold any deformable material and is not limited to the use of compression molding plastic. During this time, the ram 12 and upper die 22 are retracted vertically away from the platen 26 and lower die 24. The motor 18 is continuously spinning the flywheel 16 in anticipation of the engagement of the flywheel 16 to the ram 12. The accumulator 40 holds a supply of hydraulic fluid at a predetermined pressure. Microcontroller 54 maintains the flow control valve 46 in a quiescent state, and there is no fluid flow either into or out of the hydraulic cylinders 32. At this point, the hydraulic cylinders 32 are at the upper limit of their range of motion, therefore the platen 26 is elevated to its maximum height.

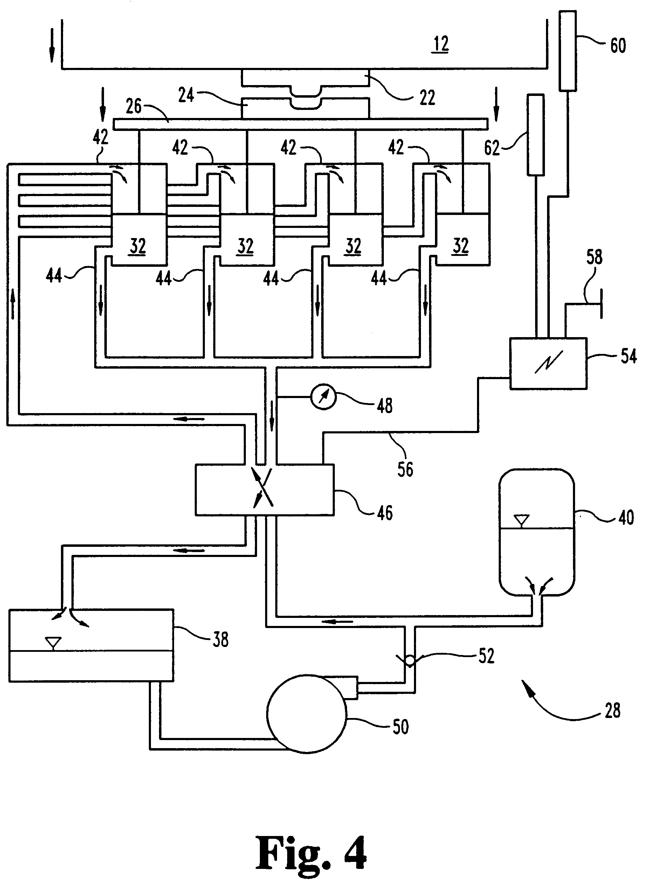

Referring now to FIG. 4, the microcontroller 54 engages the clutch of mechanical press 10, thereby imparting downward motion to the ram 12/upper die 22. If the lower die 24/platen 26 were to remain stationary, the upper die 22 would collide with the lower die 24 in an abrupt manner which is completely unsuitable for compression molding of plastic. The microcontroller 54 therefore instructs the flow control valve 46 to couple the accumulator 40 to the fluid ports 42 such that pressurized hydraulic fluid is forced into the top of the hydraulic cylinders 32. The flow control valve 46 is also instructed to couple the hydraulic fluid ports 44 to the reservoir 38. The pumping of fluid into the top of the hydraulic cylinders 32 causes fluid to be forced out of the bottom of the cylinders 32 and into the reservoir 38. This process begins the retraction of the cylinders 32 and hence the downward motion of the lower die 24 such that the upper die 22 and lower die 24 are moving downward at the same rate.

The position of the ram 12 and platen 26 are sensed by the linear transducers 60 and 62 and the microcontroller 54 uses this information to calculate the velocity of the upper die 22 and the lower die 24. The microcontroller 54 instructs the flow control valve 46 to gradually restrict the amount of hydraulic fluid being pumped into the inlet ports 42 so that the lower die 24 gradually slows down. Because the upper die 22 is moving at a fairly constant velocity, it eventually overtakes the lower die 24, which has a decreasing velocity. By controlling the rate at which the velocity of the lower die 24 decreases, the microcontroller 54 can produce any desired rate of closure between the upper die 22 and the lower die 24. The microcontroller 54 then disengages the flywheel 16 from the ram 12. The flow control valve 46 is instructed to further decrease the velocity of the lower die 24 (which is now supporting the ram 12/upper die 22). This operation is carried out such that the engaged upper die 22 and lower die 24 reach a velocity of zero when they come to rest at the bottom of the platen's range of motion (i.e. when the platen 26 rests on the beams 34).

It will be appreciated by those skilled in the art that the microcontroller 54 has the ability to sense the position (and therefore determine the velocity) of the ram 12/upper die 22 at all points within its range of motion. The microcontroller 54 further has the ability to control the position and velocity of the platen 26/lower die 24 throughout their range of motion. It is therefore possible for the control system to accommodate any ram velocity profile with an appropriate descending die cushion velocity profile in order to produce any desired rate of closure. For example, if the ram 12 is free-falling, it will accelerate as it travels downward. The ram velocity will therefore not remain constant, but will rather follow a ram velocity profile. The microcontroller 54 is capable of measuring this ram velocity profile and commanding a corresponding cushion velocity profile that will produce the desired rate of closure.

As the upper die 22 gradually overtakes the lower die 24, the weight of the ram 12 is incrementally applied to the mated die halves, thereby simulating the squeezing pressure created by a hydraulic press. When the mated dies come to rest on the beams 34, the full weight of the ram 12 is applied to the mated dies. The tonnage rating of the mechanical press 10 therefore determines the maximum pressure which can be applied to the plastic in the dies. Different compression molding pressure requirements can be accommodated by use of the present invention with different mechanical presses having differing tonnage ratings.

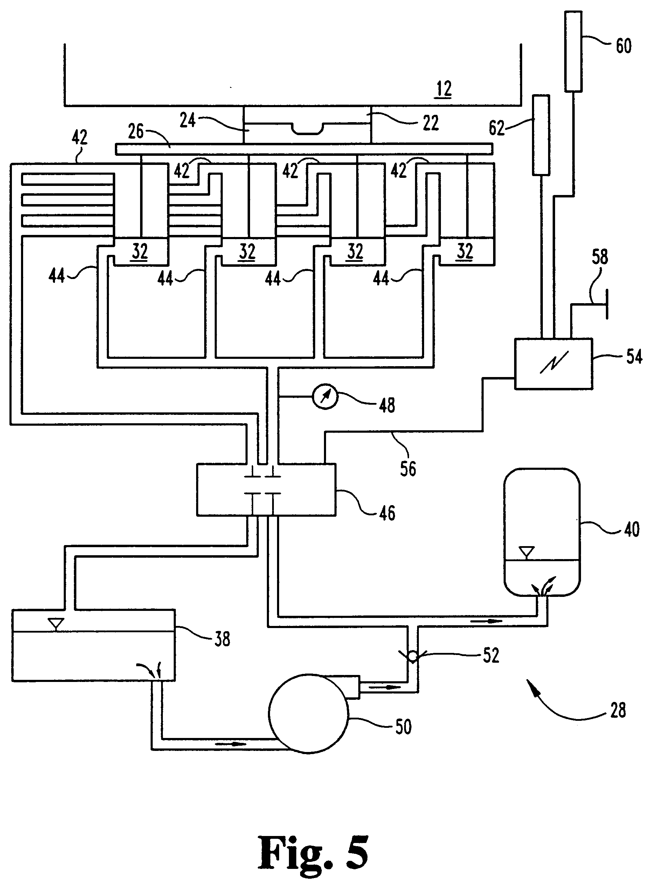

Referring now to FIG. 5, the controllable descending die cushion 28 is shown in this completely lowered state. The upper and lower dies are engaged and the full weight of the ram 12 is bearing upon the two die halves. The hydraulic cylinders 32 are at their lowest extension, and the flow control valve 46 has been closed. The plastic compression molding process will require that the two die halves 22, 24 remain closed for a specific amount of time. The microcontroller 54 incorporates a timer which is used to keep track of this closure time. During this time, the pump 50 pumps hydraulic fluid from the reservoir 38 into the accumulator 40 in order to create pressure therein in anticipation of the raising of the platen 26 in the next stage of the cycle.

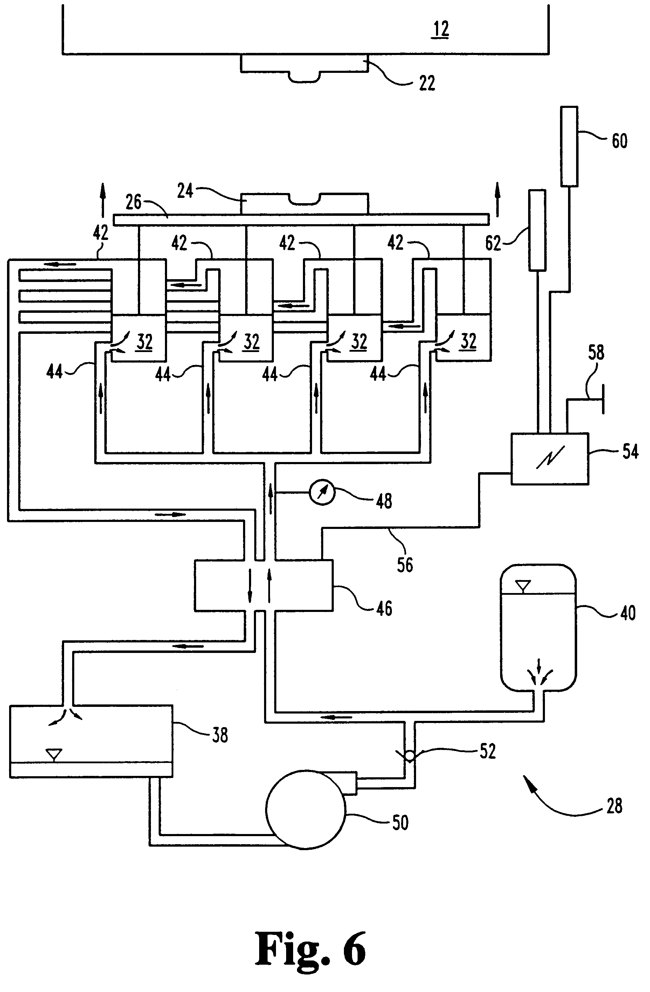

Referring now to FIG. 6, the final stage in the plastic compression molding process is illustrated. After the required closure time has elapsed, the microcontroller 54 engages the flywheel 16 to the ram 12 and retracts it away from the platen 26. At the same time, microcontroller 54 instructs the flow control valve 46 to apply pressurized hydraulic fluid from the accumulator 40 to each of the hydraulic fluid ports 44, while allowing fluid from each of the hydraulic fluid ports 42 to drain into the reservoir 38. In this way, the hydraulic cylinders 32 are raised back up to their initial position. Once the upper die 22 is separated from the lower die 24, the molded plastic parts may be removed from the lower die 24. Raw plastic material is then inserted into the lower die 24 and the compression molding cycle begins once again.

It will be appreciated by those skilled in the art that the ability of the controllable descending die cushion 28 of the present invention to impart controllable relative motion between the upper die 22 and the lower die 24 of a mechanical stamping press allows such a press to be used in the compression molding of plastic. Without such a controllable descending die cushion 28, the mechanical stamping press is unable to control the rather critical parameters of the compression molding process. The present invention makes it possible for virtually any mechanical stamping facility to become a manufacturer of compression molded plastic parts without having to invest in large, expensive hydraulic presses. With the present invention, such a stamping facility can utilize its existing equipment which it already owns, which it is comfortable with, and which it knows how to maintain. The cost of the controllable descending die cushion 28 is approximately 10-20% of the cost of purchasing a used hydraulic press. In addition, the controllable descending die cushion 28 may be moved from press to press in order to suit the individual tonnage requirements for a given plastic part to be molded. Because mechanical stamping presses are less expensive than hydraulic presses, have a lower burden rate and a faster cycle time, the cost of manufacturing a compression molded plastic part in a mechanical press will be significantly lower than the cost of producing the same part in a hydraulic press.

It will be further appreciated by those skilled in the art that the presence of the microcontroller 54 in the mechanical stamping press system allows the control of other parameters in the compression molding process. For example, the temperature of the die 24 can be monitored and regulated by the microcontroller 54, such that the compression molding process will not begin until the desired preset temperature has been achieved.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected. For example, the controllable descending die cushion 28 of the present invention can be operated to maintain a violent collision between the two die halves, although at less than the full force produced by the ram working alone. This may be accomplished by slowing down the descending die cushion 28 at a relatively rapid rate so that a collision is produced with the ram 12, rather than a gradual mating. In this way, a mechanical stamping press may be made with a variable tonnage rating. For example, a 250 ton ram may be used to create 50, 100, or 250 ton collisions by appropriately adjusting the control parameters.

## Claims

1. An apparatus for compression molding deformable materials, comprising:
a ram having a weight and operable to reciprocate in a vertical direction;
an upper die half coupled to the ram;
a lower die half operable to mate with the upper die half when the ram descends a sufficient distance; and
a controllable descending die cushion supporting the lower die half;
wherein the controllable descending die cushion is operable to cause the lower die half to descend at a cushion velocity profile which is less than a ram velocity profile so that a rate of closure of the upper die half with the lower die half is controllable, such that the ram weight is incrementally applied to the mated die halves.

2. The apparatus of claim 1, wherein the ram is part of a mechanical stamping press.

3. The apparatus of claim 1, wherein the deformable material is plastic.

4. The apparatus of claim 1, wherein the controllable descending die cushion comprises:
a platen supporting the lower die half; and
at least one hydraulic cylinder supporting the platen and operable to cause the platen to descend at the cushion velocity profile.

5. The apparatus of claim 4, further comprising:
processing means operatively coupled to the at least one hydraulic cylinder and operable to control a motion of the at least one hydraulic cylinder.

6. The apparatus of claim 4, further comprising:
at least one support member operable to support the platen at its lowest vertical position.

7. The apparatus of claim 5, further comprising:
a first linear transducer coupled to the processing means and operable to measure a first vertical position of the ram; and
a second linear transducer coupled to the processing means and operable to measure a second vertical position to the platen.

8. A controllable descending die cushion adapted for use with a mechanical stamping press which includes a ram having a weight, the ram operable to reciprocate in a vertical direction and an upper die half coupled to the ram, the controllable descending die cushion comprising:
a lower die half operable to mate with the upper die half;
a platen supporting the lower die half;
at least one hydraulic cylinder supporting the platen; and
processing means operatively coupled to the at least one hydraulic cylinder for control of a motion of the at least one hydraulic cylinder;
wherein the processing means is operable to cause the lower die half to descend at a cushion velocity profile which is less than a ram velocity profile so that a rate of closure of the upper die half with the lower die half is controllable, such that the ram weight is incrementally applied to the mated die halves.

9. The controllable descending die cushion of claim 8, further comprising:
at least one support cylinder operable to support the platen at its lowest vertical position.

10. The controllable descending die cushion of claim 9, further comprising:
at least one support beam coupled to the at least one support cylinder.

11. The controllable descending die cushion of claim 8, further comprising:
a first linear transducer coupled to the processing means and operable to measure a first vertical position of the ram; and
a second linear transducer coupled to the processing means and operable to measure a second vertical position of the platen.

12. The controllable descending die cushion of claim 8, wherein the processing means comprises a microprocessor.

13. The controllable descending die cushion of claim 8, wherein the processing means is further operable to cause the upper and lower die halves to unmate after a predetermined closure time.

14. A method for compression molding deformable materials, comprising the steps of:
(a) placing the deformable material in a lower die half;
(b) causing a ram having an upper die half affixed thereto and having a ram weight to descend toward the lower die half at a first velocity, the first velocity following a first velocity profile over time; and
(c) causing the lower die half to descend at a second velocity, the second velocity following a second velocity profile over tine, wherein the first and second velocity profiles cause the upper die half to overtake the lower die half at a controllable closure rate, thereby incrementally applying the ram weight to the mated die halves.

15. The method of claim14, further comprising the step of:
(d) heating the lower die half to a predetermined temperature prior to mating the upper and lower die halves.

16. The method of claim 14, further comprising the steps of:
(d) determining the first velocity; and
(e) calculating the desired second velocity such that the upper die half will overtake the lower die half at a predetermined closure rate.

17. The method of claim 16, wherein step (d) further comprises the steps of:
(d.1) periodically determining a vertical position of the upper die half; and
(d.2) differentiating the data produced by step (d.1) in order to determine the first velocity.

18. The method of claim 14, wherein step (b) is caused by engaging a spinning flywheel with the ram.

19. The method of claim 14, wherein the step (c) comprises altering an amount of fluid in at least one hydraulic cylinder supporting the lower die half.

20. A mechanical stamping press, comprising:
A ram having a weight and operable to reciprocate in a vertical direction;
an upper die half coupled to the ram;
a lower die half operable to mate with the upper die half when the ram descends a sufficient distance; and
a controllable descending die cushion suporting the lower die half;
wherein the controllable descending die cushion is operable to cause the lower die half to descend at a cushion velocity profile which is less than a ram velocity profile so that a rate of closure of the upper die half with the lower die half is controllable, such that a collision is produced between the upper and lower die halves which has a first collision magnitude that is less than a second collision magnitude created when the lower die half does not move.

21. An apparatus for compression molding deformable materials, comprising:
a ram;
a first die half coupled to the ram;
a second die half operable to mate with the first die half on displacement of the ram;
a controllable die cushion supporting the second die half;
wherein the die cushion is operable to cause the second die half to descend at a cushion velocity profile which is less than that of the ram so that displacement of the ram towards the second die half is controllable to ensure that the weight of the ram is applied to the material die halves incrementally.
